# EUROPEAN PATENT APPLICATION

(11) **EP 1 335 281 A1**
(43) Date of publication of application: **13.08.2003**
(21) Application number: 03075324.8
(22) Date of filing: 31.01.2003
(51) Int. Cl.: G06F 9/445

(54) **System and method for loading program code into a device**

(30) Priority: 31.01.2002 NL 1019876
(71) Applicant: Chess Embedded Technology B.V., 2000 CA Haarlem (NL)
(72) Inventor: Du Bois, Marcel J.P., 2014 EA Haarlem (NL)
(74) Representative: Jilderda, Anne Ayolt

(57) **Abstract**

A system for loading a program code from a source device (10) into an electronic target device (20) comprises transfer means (30) for transferring the program code to the target device and placing it in the memory (21, 22) thereof. The source device comprises means for forming an as yet incomplete internal representation (65) of the program code, which is complete in the sense that only the data specific to the target device are lacking therein. This as yet incomplete internal representation (65) is transferred to the target device together with reference information (65, 66), both being subsequently stored in the target device, This reference information (65, 66) enables the target device to complete the as yet incomplete internal representation (65) into a fully operational internal representation (56) on the basis of the actual hardware and software environment in the target device.

## Description

The invention relates to a system for loading at least a partial program code from a source device into a target device which comprises electronic processing means and memory means, said source device being designed for forming an at least substantially complete internal representation for the target device on the basis of the partial program code, while transfer means are provided for transferring the substantially complete internal representation of the partial program code to the target device and for placing said representation in the memory thereof.

Although not exclusively, this relates mainly to computer systems and other digital computing devices provided with central processing means in the form of one or several microprocessors in combination with the necessary working storage. The working storage here comprises usually a combination of a random access memory (RAM) which can be accessed particularly quickly for both writing and reading operations but which loses all its stored data upon the disappearance of its supply voltage and a non-volatile reading memory which is less expensive in general but also less quickly accessible and not random-writable, but in which the stored data remain present when the supply voltage drops out.

To feed the processing means of such a device with a program code, a source code is usually first prepared by hand in accordance with the syntax of the chosen programming platform. This source code is characterized by a high degree of human readability. The source code forms the basis upon which a program code is generated by means of a so-termed compiler or interpreter. A compiler provides a once and for all translation operation such that the program will always be carried out on the basis of the same program code, whereas in the case of an interpreter the source code is converted into a program code suited to the processing means each time the program is implemented. There are also hybrid forms in which a first translation operation is carried out once only, and the final conversion to the actual program code takes place from an intermediate code which is sometimes denoted P-code, byte code, or object code.

A number of steps can usually be distinguished in the conversion of a source code to a program code. First, a lexical analysis of the source code takes place, which is primarily designed to apply a syntactic structure to the source code. In a next step, it is checked whether the prescribed syntax was correctly applied in this structure, i.e. in accordance with the rules of the relevant programming language. Then a semantic analysis is carried out on the syntactic structure so as to generate an object code therefrom. Finally, the object code may be optimized in the sense that it can be implemented more quickly or will use less memory space, or both. Depending on the specific development environment, the object code itself is the program code, or it has to undergo a comparatively simple conversion in order to yield the eventual program code.

The program code is loaded into the memory of the device and executed from there. An important final step sometimes takes place during this loading, i.e. the so-termed linking step. In this step, links in the program code to further program constituents such as, for example, variables, procedures, and methods, are coupled to memory addresses in the hardware where the respective variables or methods can be found. These may be internal references to variables and methods which are defined within the source code itself, or alternatively external references to variables and methods defined in a software library that may or may not have been supplied along with the program or may have been independently developed. The specific memory addresses to which the final program code has to refer are device-dependent and are usually retrieved in real time in this linking step and incorporated in the program code.

A programming platform that has gained a major prominence is Java, developed in the eighties by the US company of Sun Microsystems Inc.. Java is compiled, like other programming languages, but not into a final program code but into an intermediate byte code, also denoted a class file. This class file is executed by the so-termed Java Virtual Machine (JVM). This is a software processor that completely screens off the underlying hardware. As a result, one and the same Java byte code can be executed in any hardware environment, provided that a Java Virtual Machine for this hardware environment is available and is loaded. This property renders Java eminently suitable for applications that have to run on widely differing platforms, denoted cross-platform applications, such as, for example, browsers for the Internet. Such browsers use a Java Virtual Machine supplied with the software in order to cooperate therewith instead of with the actual hardware processor.

Thanks to this platform-independence, Java is now used on a wide scale for Internet applications, both for the browser itself and for various plug-ins and add-ons, and it is especially this property to which Java owes its popularity. Increasingly Java has also become a platform for widely differing devices specially geared to a given desired function that have no, or at least much lesser connections with the Internet. This relates in particular to various specific terminals with a specialized hardware and software environment for providing a certain special function on the basis of the loaded program code, such as pay terminals for electronic transactions, terminals for access control and identification, so-termed set top boxes for providing TV with additional multimedia and communication functions, game computers, parking terminals, and the like. In addition, small portable computers such as personal digital assistants (PDAs) and mobile telephones such as, for example, GSM, GPRS, and the future UMTS sets are conquering the market with a continuously expanding range of options.

The discussion here is about so-termed embedded systems. Typical of these systems is a tailor-made software and hardware environment with comparatively limited memory means, which in addition comprise a comparatively small proportion of random access, relatively fast volatile memory (RAM) and for the remaining proportion comprise electronically erasable, programmable read memory (EPROM) which is indeed non-volatile, but into which it is usually not possible without special measures to write quickly and bit-wise. To utilize the system sources present in such devices as efficiently as possible, the devices are usually provided with an operating system divested of all unnecessary frills, which is preferably located in the non-volatile read memory of the device together with the program code of the required application software. The device is usually configured such that the operating system and the standard applications can be executed directly from this read memory, so that the device is immediately ready for use after being switched on. The operating system and the application software are thus as it were embedded in and interwoven with the hardware of the device, which explains the name given to such systems.

Another important feature of Java is referred to as "late binding". This means that it suffices to point to a number of functions, methods, variables, and other program entities in the source code in order for the functions offered thereby to be made available, whereas the actual loading of these program entities and the allocation of the working storage required for this are put off until a call is actually made thereon in the execution of the code. Should the program sequence of the code not lead to such a call, the relevant entity is not loaded at all, and no memory space is kept reserved for this unnecessarily. Not only is the available working storage handled very effectively and efficiently as a result of this, but the initial loading time of the application can also be considerably shortened.

Late binding, however, also has a disadvantage which manifests itself particularly in embedded systems. It is in fact a condition that an extensive Java software library should be available in an unlinked and freely accessible form in the memory of the target device, so that the functions, methods, and variables can be called up therefrom at any moment during the execution of the program code, wherever reference is made to them in the program code. The referred classes, methods, fields, and the like are linked to one another and to the virtual machine into a whole that is placed in the RAM of the target device.

This is normally not a significant limitation for desktop systems, but the comparatively limited memory capacity of embedded systems is usually insufficient for executing therein the program code and also to load the Java Virtual Machine, a full Java software library, and further application software. A development tool has accordingly been specifically made for such embedded systems under the name of Java Code Compact, by means of which the loading and linking of the program code can be performed as much as possible beforehand and separately from the eventual target machine, after the necessary conversion operations have been carried out by a Java compiler. In this case it suffices to store the whole of the classes, methods, fields, etc., interlinked and linked to the virtual machine, in the target device, as it were as a memory card. This full representation of the program code may then be stored in a non-volatile part of the memory and is directly executable therefrom. The amount of memory space required to be freely present in the target device for the execution of the program code can thus be considerably reduced.

Normally the Java Virtual Machine (JVM) first sees to the localizing, linking, and loading of all class files to be used during the execution as well as to the dynamic allocation of the internal data structures required for the various components. The virtual machine creates and manages an internal representation on the basis of the offered program code. Reference tables are made for this, in which all references to variables and calls to the program code, especially external classes, are registered within a running application. The JVM continually refreshes this table in dependence on whether more or fewer classes are to be dynamically linked. A major portion of the runtime memory occupation of the scarce RAM space by a Java application is due to this dynamic memory allocation.

To reduce this claim on RAM space, the Java Code Compact renders it possible to load all required classes and to link them to the Java Virtual Machine as early as in the development environment, i.e. off-line, and thus to create a fully operational internal representation of the program code beforehand. The "memory card" resulting from this is subsequently transferred in its entirety to the read memory of the embedded system and can then be directly executed from there. A considerable amount of random access memory is saved in this manner, said memory is indeed mainly called upon to store continuously changing variables. Since the byte code and all variables, methods, and classes to which reference is made directly or indirectly in the program code are linked in advance and are formed into such an internal representation in conjunction with the Java Virtual Machine, it is no longer necessary to retrieve and manage references thereto dynamically, so that also the RAM space otherwise required for this will be at least substantially saved. In addition, the embedded system remains free from redundant classes and components in this arrangement and comprises exactly that which is necessary for executing the tasks.

This latter advantage, however, also brings with it a disadvantage. Not being dynamically linked any more, all applications must be laid out together with the virtual machine in the form of a memory card, which is then transferred as a complete and fixed entity to the system. This procedure is to be followed even for the tiniest change in one of the classes, variables, methods, and the like involved in an application. This may be comparatively time-consuming, especially if the transfer to the system is to take place from a distance, given the often limited bandwidth of existing telecommunication facilities. If different versions of the same application are being used and in addition further applications (of third parties) have been loaded into the terminal, attuned to the hardware environment and software requirements of the terminal, as often happens in practice, it is furthermore necessary to know exactly beforehand the specific software configuration of the terminal so as to ensure that the correct memory card is written into the terminal. This requires an extensive, maybe even impossible degree of administration and discipline, especially if many mutually differing terminals are to be updated from a central work environment. A sufficient amount of free memory space must also be available in the device for loading the new memory card. For any future updates, moreover, sufficient memory space must remain freely available, so that the advantage of a smaller memory consumption by Java Code Compact is at least partly eliminated, at least in those cases where an update of the software environment is regularly required.

The present invention has for its object to provide a system of the kind mentioned in the opening paragraph which does not have the above disadvantages, or at least to a much lesser degree.

To achieve the envisaged object, a system of the kind mentioned in the opening paragraph is characterized in that the source device is designed for generating an as yet incomplete internal representation of the partial program code together with reference information, which reference information enables the target device to determine references in the program code and to enter them afterwards, in that the transfer means are capable of and designed for transferring the as yet incomplete internal representation of the program code and the reference information to the target device, and in that the target device is capable of and designed for forming a complete internal representation of the program code from the incomplete internal representation on the basis of the reference information provided to the target device. In this case, too, an internal representation of the program code is transferred to the target device, so that no further conversions, and in particular no linking steps, need be carried out in the device itself any more, and the program code can be executed from the read memory. Unlike in the Java Code Compact, however, the specific addresses of the further program parts to which reference is made in the program code and other links between different program parts are not (yet) finally entered. Instead, reference information is supplied which enables the loading means to determine the relevant data afterwards in cooperation with the processing means and to join it into the internal representation of the code.

The invention is based on the recognition that it is only this last step which requires a detailed knowledge of the specific hardware and software environment within the device, and that apart from this the memory card of the program code can be fully prepared beforehand together with the reference information without taking into account the specific hardware and software environment of the end device in which the program code is to be accommodated. The final step, i.e. the actual allocation, coding, and entering of memory addresses and other reference information, however, is device-dependent and is accordingly carried out in the device itself. The reference information remains present in the target device, whether or not in its original form, and can accordingly be utilized also in a later stage for (re)constructing this address information. Upon a update, supplementation, or other modification of the loaded software configuration, therefore, it is only the modified portion thereof that has to be transferred together with the accompanying reference information to the device. The loading means in the device in cooperation with the processing means subsequently see to a (re)definition of all address data on the basis of the reference information, new as well as unchanged, contained therein so as to process said information subsequently in the internal representation of both the new and the original program code, as applicable. The software configuration present in the device can thus be managed in a particularly efficient manner.

A special embodiment of the system according to the invention is characterized in that the source device is designed for storing the string references and the partial program code in a first file and for storing the internal representation of the program code together with other reference information in a separate, second file, and in that the transfer means are capable of transferring both files to the target device. The base code for the source device may then be a source code designed in accordance with the prescribed syntax of the programming platform used, or alternatively it may comprise a metacode, also denoted p-code, byte code, or object code, that has already undergone a first conversion operation. This forms the starting point, according to the invention, for forming a rough, i.e. not fully completed internal representation which is attuned to the final target device. Starting from a Java platform, this representation is effective for any target device that supports the same Java Virtual Machine. The rough internal representation is free from specific string information at least to a substantial degree. The latter information is stored in a separate file, and a relational coupling is created between it and the internal representation. The rough internal representation is placed in a second file together with reference information. In certain cases the target device comprises an internal administration of string information that can thus be supplemented with the first file in a particularly efficient manner, whereupon the second file has basically become redundant and may be erased. A further special embodiment of the system according to the invention is thus characterized in that the target device is constructed for interweaving the offered file containing string references with an internal administration of other string references.

In a further special embodiment, the system according to the invention is characterized in that the string references are stored in the target device in an encrypted form, in particular encrypted in accordance with a HASH algorithm, and more in particular in that the string references are encrypted in accordance with a HASH algorithm implemented in the target device and are stored in that form in one or several HASH tables or other data structures maintained by the target device. The encoding, in particular by a HASH algorithm, makes for a considerable reduction in the storage space required for the string information, while in addition a substantially faster access can be achieved in comparison with uncoded information. In a particular embodiment, the encrypted information is accommodated in one or several HASH tables or other data structures in accordance with an algorithm that is used (also) by the target device itself. As a result, a seamless linkage is obtained, and the separate file with string information relating to the new program code can subsequently be dispensed with.

The target device is capable of composing a complete new memory card on the basis of the offered rough internal representation and the accompanying reference information such that it can be directly executed by the processing means in the target device. In a special embodiment in this respect, therefore, the system according to the invention is characterized in that the memory means of the target device comprise a random access volatile memory as well as an electronically writable non-volatile read memory, and in that the program code is loaded at least substantially into said read memory. The program code can be executed from the non-volatile read memory (also denoted EPROM: Erasable Programmable Read Only Memory) in this case, without the necessity of loading a copy thereof into the volatile random access memory or RAM. This constitutes a considerable saving in storage space required for the program code, in particular as regards the comparatively expensive RAM. In addition, the non-volatile character of the read memory renders the program code independent of any interruptions in the power supply to the device, which thus remains in a defined operational state at all times.

Various types of programmable read memories are known per se. A type that has come into widespread use during the past years is the so-termed flash memory, also referred to as Flash-EPROM. This memory can indeed be programmed bit by bit, but it can only be erased in blocks. This erase limitation has major advantages as regards cell size and accordingly the compactness and cost price of the memory. It implies in practice that, for example, a logic "1" can be written as a bit, but a logic "0" will always enter not only the envisaged location but also the surrounding locations of one and the same memory block. The read memory is thus not randomly writable. If the system according to the invention is to be able to be based nevertheless on such a compact read memory for the execution of the program code, a special embodiment of the system according to the invention is characterized in that the target device is provided with initializing means which are designed for initializing portions in the program code in an envisaged location in the read memory on the basis of reference information present and maintained as such in the target device, such that information can be freely written in said location. The initialization has the result that, for example, all memory addresses contain a logic "0" in the indicated locations in a memory in which only a logic "1" can be randomly written, or a logic "1" if a logic "0" can be randomly written. The exact modifications can thus still be provided in the program code placed in the read memory afterwards, so that the program code remains fully executable from the read memory.

A further preferred embodiment of the system according to the invention is characterized in that the target device is provided with defragmentation means which are designed for placing the program code in the target device as much as possible in a contiguous manner in the read memory of the target device. During defragmentation, mutually adjoining memory blocks are allocated as much as possible so as to avoid a scattered arrangement. This promotes the execution speed of the program while at the same time reducing the total memory consumption of the program code. This means in practice that memory blocks are shifted and are subsequently laid down again in an uninterrupted arrangement as much as possible.

In this context, a particularly preferred embodiment of the system according to the invention is characterized in that the defragmentation means comprise the initializing means. During defragmentation, the program blocks are usually moved via a memory buffer in the freely accessible part of the working storage to a new memory location, or back to the old one. Initializing the memory in the envisaged location during this means that no additional process steps are necessary for this, and the memory needs to be addressed less often, which will benefit its service life.

Thanks to the invention, a change in the software configuration in the target device no longer requires this configuration to be fully replaced, but merely the changed portion thereof. This results inter alia in a substantially relieved load on the transfer means. In a further special embodiment, accordingly, the system according to the invention is characterized in that the source device and the target device are at least temporarily, whether or not simultaneously, coupled to one another by means of at least one communication link, and in that the transfer means render possible a data exchange over said communication link. In this manner the device can be provided with the necessary program code in particular via a telecommunication network, whether or not public, whether or not hard-wired, so that remote-control operation is possible. The program code may then be adapted and developed further in a specialized development environment elsewhere, whereupon the modified partial program code together with the accompanying reference information can be distributed over a plurality of devices, if so desired, via the telecommunication network without human intervention. This is feasible in practice also in the case of a telecommunication network of limited bandwidth because, thanks to the invention, only the modified partial program code and not the entire program code is to be uploaded. The nature of the telecommunication network used is of little relevance to the system according to the invention. Thus the telecommunication network may comprise a fixed telecommunication link or form part of a public telephone system, or, for example, it may be formed by a local or more expanded computer network (LAN or WAN), in particular the Internet.

The invention will be explained in more detail below with reference to a specific embodiment and an accompanying drawing, in which:
Fig. 1 diagrammatically shows a system by means of which a program code is loaded into a target device by a conventional, prior art method;
Fig. 2 diagrammatically shows a system by means of which an internal representation of a program code is loaded into a target device by a conventional, prior art method;
Fig. 3 diagrammatically shows a device wherein an internal representation of a program code is loaded into a target device by an embodiment of a system according to the invention;
Fig. 4 is a more detailed diagram of a first portion of the system of Fig. 3; and
Fig. 5 is a more detailed diagram of a second portion of the system of Fig. 3.

Corresponding items have been given the same reference numerals as much as possible in the Figures.

Although the ensuing example will be based on a Java environment, it should be noted that all that is described in that connection is equally valid mutatis mutandis for other software environments. Like other programming languages, Java is compiled, albeit not into a final programming code, but into an intermediate byte code or class file. This byte code is executed by the so-termed Java Virtual Machine (JVM). This is a software processor that fully screens off the underlying hardware. As a result, one and the same Java byte code can be executed in any hardware environment, provided a Java Virtual Machine is available for this hardware environment and is loaded. This property renders Java eminently suitable for applications that are to operate on various platforms, denoted cross-platform applications, and is a major reason for the fast growing popularity of this programming platform.

By now Java is used not only for a PC environment but also increasingly for the development of applications for more specialized devices of various kinds such as, for example, pay terminals for electronic financial transactions, set top boxes, parking terminals, telephone exchanges, personal digital assistants (PDAs), game computers, and the like. These are referred to as embedded systems. Typical of these systems is a usually specially tailored hardware environment provided with a usually limited memory space, moreover partly comprising volatile (RAM) and partly non-volatile memory (EPROM), in combination with a specific software environment consisting of a more or less dedicated operating system in combination with specific application software. The standard application software and the operating system are then usually loaded into the non-volatile part of the memory so as not to lose the data in case of an inadvertent power cut to the device.

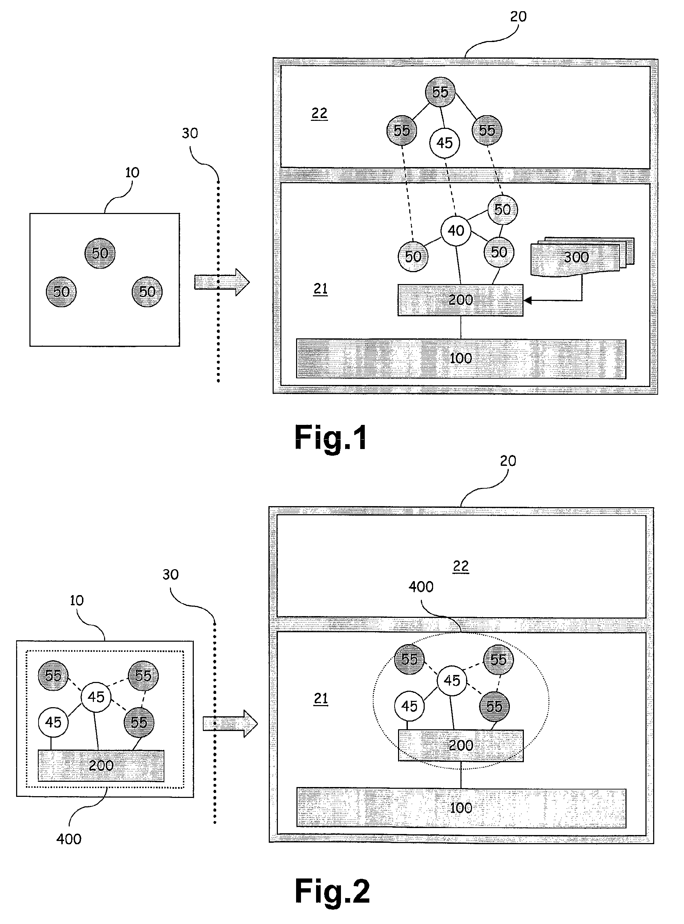

New or updated software is usually loaded into such a device from the exterior. A suitable communication interface is used for this, ranging from a direct link, for example via a serial RS232 or similar interface, to a telecommunication link that may or may not be temporary via a public telephone network, a computer network that may or may not be local, and the Internet. This is diagrammatically depicted in Figs. 1 to 3, wherein 10 denotes the off-line system from which a new or updated program code is transferred to a relevant target device 20 via a suitable interface 30. Said device has the architecture described above of an embedded system with a partly non-volatile memory 21 and partly volatile memory 22. The non-volatile memory 21 comprises rewritable read memory (EPROM), in this case of the Flah type. Commercially available RAM storage is used for the volatile memory 22, in which two main classes can be distinguished, i.e. static (SRAM) and dynamic (DRAM) random access memory, which can both be utilized in a wide range of embodiments within the scope of the invention.

After a suitable Java compiler has been used for forming the respective byte codes of the classes 50 belonging to a new or updated application from a source code, the classes are written into the non-volatile part 21 of the memory means, see Fig. 1. This part of the memory contains besides the operating system 100 also the Java Virtual Machine 200 and an associated Java software library 300. All program codes of applications to be executed are now in the non-volatile memory. When the virtual machine 200 is started, the transferred classes 50, including the newly added ones, belonging to the program code are linked to the classes 40 from the software library 300 called therein and to the virtual machine. References to variables and methods are entered during this and subsequently continuous ly managed by the virtual machine 200. This set of classes 45, 55 linked to one another and to the Java Virtual Machine is loaded into the volatile memory 22 and can be executed from there. This process is to be run through completely whenever the supply voltage has been interrupted so as to copy the program code again into the volatile memory 22 and to set up the administration of mutual references once more. The moment a not yet linked class is called in the execution of the application, the virtual machine 200 looks up the associated code in the software library 300 for linking this class subsequently after all and again placing a copy thereof in the volatile memory. This process is called "late binding" and it renders the Java application particularly flexible and efficient.

A disadvantage of the procedure outlined above is that besides the virtual machine 200 an extensive unlinked library 300 must be available in the memory 21, 22 of the device, while in addition copies of the classes, methods, fields, and the like actually referred to must be linked to the virtual machine and must as such also be present in the volatile memory, which will occupy much storage space. Moreover, the application cannot be executed directly from the non-volatile memory 21, but a copy 45, 55 of the related program code must be loaded into the volatile memory 22 before it can be executed. Not only does this delay the start-up time, which is disadvantageous in particular after an interruption in the supply voltage, but the volatile memory 22 is also kept occupied for a major portion thereby right from the start. To alleviate these disadvantages, a software tool was developed and made available to the public under the designation "Java Code Compact". Herein, the new or updated classes 50 are linked to the Java Virtual Machine 200 off-line already, i.e. outside the final target device 20, and all references to variables, methods, and classes are fully implemented in advance. The result is as it were a memory card 400, see Fig. 2, of the device 20 such as it would otherwise have been formed in runtime. This internal representation 400 of the program code covers the entire runtime environment of the device and is transferred in its entirety in this form to the non-volatile memory 21 of the device 20. The program code contained therein requires no or substantially no further steps in order to be executed in the device 20 and is accordingly executable directly from the non-volatile part 21 of the memory.

The process described here has many advantages. Since the program code can be executed directly from the non-volatile memory part 21 and in particular need no longer be linked and loaded into the volatile memory part 22, the application can be operational comparatively quickly again after a power cut. More importantly, no copy of the program code need be loaded into the volatile part 22 of the memory, so that the total memory consumption of the program code is substantially smaller than in the case illustrated in Fig. 1. It is only the actually called classes, methods, and fields, etc. that are included in the internal representation, and only this memory card is transferred to the target device, so that memory space is saved also in this respect.

The process of Fig. 2, however, also has disadvantages. Since the library classes 300 are no longer available in the device, late binding is no longer possible, and instead all references must be entered right from the start. In addition, each change in the program code, however small, requires the entire memory card 400 to be laid out anew and to be transferred in its entirety to the device. It is clear that this puts a high demand on the communication interface 30. It makes the process highly time-consuming especially if the device is to be provided with a new program code from a distance via a telecommunication link with a comparatively small bandwidth. The process also requires an exact and full administration of all application software present in the device 20, accurate down to the version number, so as to ensure that the correct memory card 400 will always be written into the device later. This is practically impossible of also third parties add application software to the device.

To counteract the above disadvantages, according to the invention, the class files 50 are processed in the off-line system 10 class by class each into a file 65 containing an as yet not fully complete internal representation of the relevant class file 50, denoted ROM Class File (RCF) hereinafter, for the Java Virtual Machine 200, in which only that information is lacking for which specific knowledge of the final target device 20 is required. This relates in particular to reference information to further program constituents such as external classes , methods, and variables which are called in the program code and whose specific addresses in the memory of the device 20 are not yet known. Although this information is not present in the off-line system 10, a full administration is nevertheless made already of the location and nature of each reference in code of a ROM Class File 65 yet to be completed and is accommodated as such in an associated file 66 denoted Link Info File (LIF) hereinafter. In addition, the Constant Pool is split up, and all UTF8 data are stored in this Link Info File 66. All other Constant Pool data are in the ROM Class File 65. All preparations are thus made in the off-line system 10 that can be made without specific knowledge of the end device 20 in which the program code is to be placed.

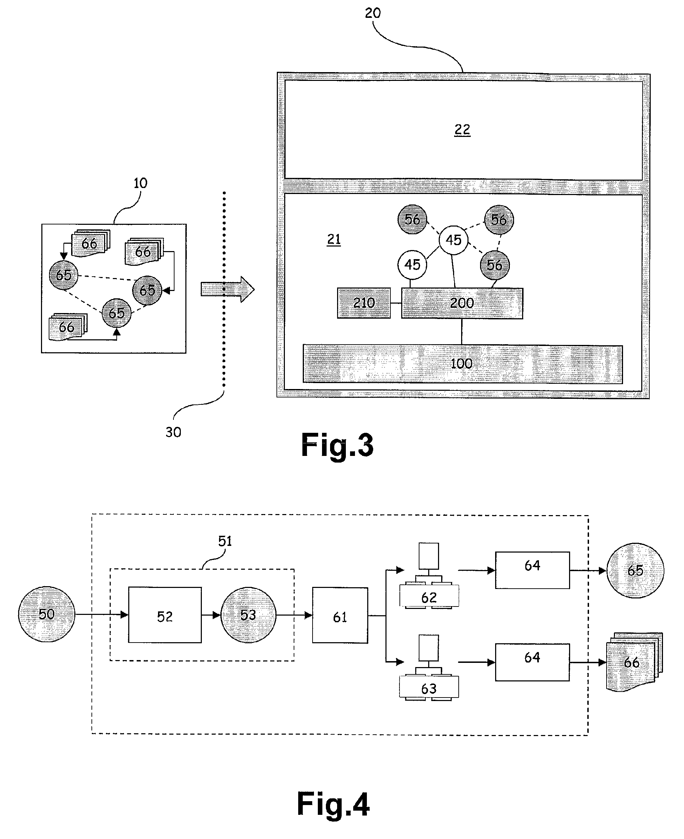

The ROM Class Files 65 and the associated Link Info Files 66 are transferred to the device 20 via the interface 30. In the device 20, the Java Virtual Machine 200 is supplemented with a software tool 210, denoted the Romiser hereinafter, which is capable of processing the offered ROM Class Files 65 and Link Info Files 66 and of updating therein as well as in the existing software environment in the device the mutual references in the various classes, such that the internal representations 45 of said classes are in the non-volatile part 21 of the memory and also the full internal representation 56 of the transferred ROM Class File 65 is placed in the non-volatile part 21 of the memory. The Romiser 210 for this purpose utilizes the reference information which, in the system according to the invention, is available in the target device and is supplemented with reference information stored in the Link Info File 66 and the previously transferred, as yet incomplete ROM Class File 65. All this will be described in more detail further below. The Link Info File has then become unnecessary and can be removed from the memory 21 of the device. The final situation is depicted in Fig. 3 and differs in no way from that of Fig. 2. The memory capacity, which is limited after all, of the device 20 is used very efficiently, and the program code can be executed directly from the non-volatile part of the memory. Unlike the case described with reference to Fig. 2, however, it is only the ROM Class Files 65 of the modified or new classes accompanied by the relevant Link Info Files 66 that are to be transferred to the device in the case of a change in or addition to the program code, so that the interface 30 is put under a considerably lesser load, and the final processing step, for which device-specific information is required for the first time, takes place in the device. The final internal representation of the new or modified code is thus adapted to the specific software and hardware environment of the device 20 in this device itself, so that this need not be taken into account in the off-line system 10 and accordingly no administration thereof is necessary. This renders the process according to the invention substantially more efficient and robust than the process described with reference to Fig. 2.

In the present example of the system according to the invention, the program code is essentially loaded in two phases into the device. The first phase takes place outside the device, i.e. off-line, and is diagrammatically shown in more detail in Fig. 4. First, the program code is converted into an internal representation for the specific processor environment in the end device. In this example, which is based on an implementation in a device with a Java Virtual Machine that screens off the underlying hardware, this is the implementation as it would otherwise have been set up by the Java Virtual Machine, but the references and other device-specific data have not yet been finally entered. Consistency with the existing and certified Java Code Compact was aimed for as much as possible for reasons of efficiency, but most of all for reasons of compatibility.

The input for this is a class file 50 written in a standard Java development environment. This class file serves, for example, for replacing an old version thereof or as a supplement to an existing software environment of an external device. The new class file 50 is supplied to a Class File Parser 52 of a more or less standard Java Code Compact tool 51 so as to form an object structure 53 therefrom which comprises the internal representation of the class file for a Java Virtual Machine. All internal structures of the class file 50 are present within this object structure 53. This Java Code Compact code 53 serves as an input for a code processor 61 which forms the core of the first phase of the system according to the invention. The code processor 61 supplements the object code 53 supplied by the Java Code Compact with reference information that will subsequently enable the target device to recalculate and enter both internal and external references into the byte code at any moment, as desired. This reference information is for one portion 62 accommodated in a so-termed ROM Class File 65 together with the mainly original byte code 53, and is for another portion 63 stored separately in a separate file 66 denoted the Link Info File hereinafter. Suitable file writers 64 are used here for writing the output generated by the code processor into a file that will subsequently be accessible in the device to the file management system operating therein.

The ROM Class File 65 thus obtained is as yet unresolved. It is true that all structures of an internal representation are present therein for the Java Virtual Machine of the class file, such as a ClassClass, a method block, field block structures including Java byte code, and a constant pool, but all string data (UTF8) have been left out and program pointers have not yet been entered. This latter information is device-dependent and can accordingly not yet be completed at this stage. Instead, reference information is prepared on the basis of which these references and string data can be reconstructed later at any moment. This reference information is distributed over the ROM Class File 65 and the Link Info File 66. The Link Info File contains all string information together with a patch table or alternative collection in which specific addresses in the ROM Class File are managed where the HASH code for certain strings is yet to be inserted. In addition, the code processor 61 generates a relocation table or alternative collection in which the nature, size (number of bytes), and location in the ROM Class File of each pointer, so that these can actually be inserted at a later stage. This relocation information is subsequently used in the target device for linking the new ROM Class File 65 to the ROM Class Files already present in the target device.

Five types of relocation may be distinguished in the relocation table. In the first place, there are internal relocations which render possible a recalculation of internal absolute pointers. An internal relocation comprises an offset pair of an offset in the ROM Class File where the relevant pointer should be present in combination with an offset where in the ROM Class File the address should be to which the pointer is to point. Besides, there are field method, and interface method relocations which render possible a recalculation of field block and method block pointers on the basis of symbolic information. This symbolic information is stored in the form of a HASH table index which is defined in more detail in the target device at a later stage. In the third place, there are class relocations which render it possible to recalculate a ClassClass pointer from symbolic information. Also, there are string relocations present in the relocation table which are made by the code processor 61. These string relocations also comprise HASH table indices which render it possible to determine the string pointers associated therewith afterwards. Finally, the generated relocation table comprises a collection of patch entries that indicate offsets in the code that are to be erased in an unlink step, yet to be discussed further below, so as to be updated in a subsequent link step. The relocation table is stored at least substantially in the ROM Class File 65 and is thus available as regards each and every ROM Class File in a system in which the relevant ROM Class File is or was loaded.

Relevant data from the Java constant pool are also processed in the reference information. String information here finds its place in the Link Info File 66, while the other constant pool entries are stored in the ROM Class File 65. The latter entries can be directly pointed to in the byte code of the ROM Class File 65. These direct references, however, are renumbered in the constant pool so as to optimize the code in this respect. This renumbering is implemented in the byte code of the ROM Class File 65 in combination with any other possible optimizations of the code.

For the purpose of implementation in a (Flash) EPROM, the locations not yet filled in the ROM Class File are brought to such a bit value that the desired information can still be written into them bit by bit after loading into an EPROM. This implies in concrete terms, for example, that exclusively logic ones or zeros, depending on the EPROM architecture, will be present in the relevant locations in the ROM Class File 65, which may be brought to their respective opposed values bit by bit later, as desired. The ROM Class File 65 and the Link Info File 66 form the output of the off-line phase of the system according to the invention and together comprise all information necessary for enabling the second phase of the system to be implemented in the device itself.

The present example starts from an implementation of the program code in a device fully formed by a chip card. The chip card is implemented here as a standard SIM module in accordance with the relevant ITA standard and is accommodated in a card slot of a further device. This further device is, for example, a pay terminal. The SIM module comprises a microprocessor and memory means accessible to the processor. The memory means then comprise partly random access, volatile memory (RAM) and partly programmable read memory (EPROM) which is non-volatile and accordingly retains its memory contents in the case of an inadvertent power cut. The supply voltage is delivered by the standard interface provided in the card slot, the latter also comprising means for the exchange of data and commands with the further device. The SIM module is driven in a master-slave arrangement with the further device, so that the latter can be fully controlled in this manner. The SIM module here forms a fully autonomously acting unit that operates on the basis of a Java Virtual Machine loaded therein and application software attuned thereto. The further device, a pay terminal in this case, may possibly comprise a number of such slots for accommodating a corresponding number of such SIM modules. Its functional capabilities may thus be expanded and upgraded as desired.

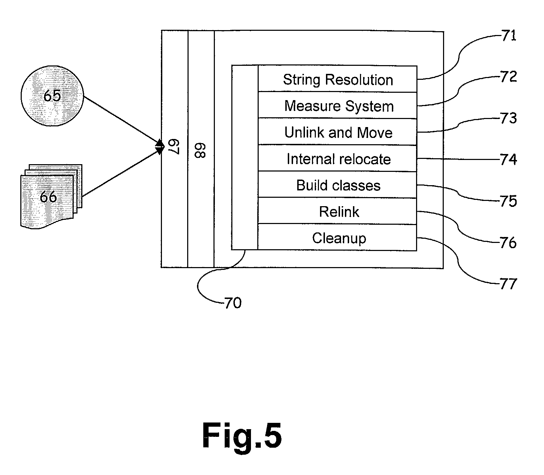

If something is to be changed in the application software of the SIM module, the ROM Class File 65 and the Link Info File 66 created off-line in the first phase of the system are transferred to the SIM module via a suitable communication link. The communication link may be a direct wire connection, for example through a RS232 serial interface or a universal serial bus connection, or alternatively a telecommunication link that may or may not be permanent via a public telephone network, a dedicated data network, or a computer network, local or otherwise, in particular the Internet. In the present case a dedicated data network is used for reasons of security, coupling the pay terminal to a bank server or the like in normal operation. The ROM Class File 65 and the Link Info File 66 are transferred to the SIM module via this network and a fitting communication interface 67 and are downloaded into the Flash EPROM of the device. The two files subsequently serve as input for the second phase in the process according to the invention. The (software) architecture 70 of the SIM module in charge of the further processing and implementation is diagrammatically shown in Fig. 5. Seven consecutive steps may be distinguished here.

In a first step 71, all string information in the Link Info File 66 is interwoven with the internal HASH table or tables already present in the target device and managed by the Java Virtual Machine. All strings from the Link Info File 66 are read out and stored in one or several of such HASH tables which are usually already present. A unique index, the HASH code, is generated for each string during this. These HASH codes are inserted in the correct locations in the ROM Class File 65. The relevant locations are specified for each string in the Link Info File 66, and this specification is also copied into the internal HASH table(s). Typically, such HASH codes are present in the relocation table, method blocks, and field blocks in the ROM Class Pile.

Two HASH tables managed by the Java Virtual Machine are especially addressed in this step, i.e. the name/type HASH table and the string Hash Table. The Java Virtual Machine stores method names and field names together with the associated signature information in the name/type HASH table. The class and interface names are also stored in this table in the present example. The string HASH table is used by the Java Virtual Machine for storing inter alia all string constants occurring in a Java program code. A seamless merging with the Java environment in the device is thus obtained in that the information from the Link Info File is accommodated in and interwoven with these HASH tables, while also a double administration is avoided, so that not only memory space but also valuable processor time is saved in the execution of the program code.

After the information from the Link Info File has thus been incorporated into the internal HASH tables and the ROM Class File, the former has become unnecessary and is accordingly removed so as to save further memory space. The HASH tables themselves are stored as files in the non-volatile Flash memory of the device and can be directly addressed from there. A file management system FFS (Flash File System) specially designed for this sees to the access and file administration in this part of the memory.

Subsequently, in step 72, the quantity of memory space is calculated necessary for the next steps in the processing of the ROM Class File that require memory space. This relates not only to the memory consumption of the ROM Class File 65 and the HASH table(s), but also to the size of method tables and array class files created by the Virtual Machine and the temporary overhead memory space that is inevitable in certain process steps. Provision is preferably also made for a preceding formation of a temporary back-up of the existing software environment of the target device. If an exception should be posed during processing or if loading of the new program code should be unsuccessful for some other reason, the previous operational state of the device can always be restored thanks to such a back-up. After the memory space required for the total program code has thus been estimated, a partition of at least that size is reserved for accommodating the program code therein. This space will be denoted the code partition in the Flash memory. The remaining Flash memory space forms a data partition in which data may be freely stored before, during, and after execution.

Processing is continued only if the available memory space allows it. First, step 73, the system prepares the target device for the new or updated software environment. All existing method tables and array classes were specifically set up for the old software environment and should accordingly be recalculated and redefined now that a new ROM Class File is implemented. These old files have thus become redundant and are accordingly removed so as to free this memory space. The newly generated HASH tables supplemented with the information from the Link Info File 66 are transferred to the code partition in this step. It is determined for each ROM Class File already present in the code partition whether it is to be maintained in the new software environment or whether it should be removed. After a back-up has been made of the ROM Class Files to be removed, if so desired, they can be safely erased in the code partition. The new ROM Class File 65 is also placed in the code partition. Old, useless ROM Class Files are thus removed from the code partition and the memory space occupied by them can be made available.

If the code partition in the new software environment is smaller than in the old situation, the surplus memory space is released to the data partition for other uses in the target device. However, if more memory is required for the code partition, it will be taken from the data partition and allocated to the code partition. It is also possible that, depending on the data management system, the memory space occupied by old files cannot be addressed again immediately after the removal thereof for the storage of other data. A reclaim procedure is necessary for this in certain cases. In such a case, a reclaim is carried out first for all removed files before memory space is taken from the data partition.

All ROM Class Files and HASH tables required for the new software environment are now in the code partition, but all pointers and calls in the program code for at least part of these ROM Class Files still refer to the old software environment. Thus, for example, the memory locations where pointers are stored still contain the old pointer values. Since the ROM Class Files are in a part of the Flash memory, new values cannot be simply written into the relevant locations. To make this possible, the system according to the invention provides an initialization procedure which, on the basis of the relocation information present in the ROM Class File, resets the byte values of all memory locations where references to be updated are present to a value that can be subsequently rewritten bit by bit. Depending on the specific memory architecture, this means that in these locations, for example, exclusively logic zeros or ones are written, so that later the opposite value can be written there bit by bit, as desired. This is an important step in the process according to the invention because this renders it possible to place the ROM Class Files in the Flash memory and nevertheless to store the correct update information therein, so that a system fully executable from the Flash memory is obtained.

The removals and displacements carried out on individual files may have led to a more or less severe fragmentation of the code partition, which is detrimental to the memory consumption and speed of execution. A defragmentation is accordingly carried out in which all necessary ROM Class Files, i.e. the ROM Class Files already present and to be maintained as well as the new ROM Class File 65, are placed in a contiguous arrangement in the memory as much as possible. In the present embodiment of the system according to invention, the initialization described in the preceding paragraph is also carried out in the code partition during this relocation of the ROM Class Files. Each file in the code partition is tested for the presence therein of a relocation table. If this is found, it is fully scanned, and (offset) memory locations are defined into which empty, initial values are to be written. The actual data are locally adapted by the RAM buffer which during relocation and defragmentation of the file retains the byte value temporarily for writing it anew elsewhere into the code partition, and subsequently erasing it from these temporary locations. The Flash memory need be addressed less often owing to this combined defragmentation and initialization of the code partition, which prolongs its service life.

The values of the pointer locations and other reference data such as, for example, class fields and variables in the ROM Class Files have thus been erased and initialized to a value allowing a bit by bit writing. The values that have to be entered locally on account of the actual local software environment are now (re)calculated in the next step 74 and written into the respective locations. First all internal pointers, i.e. references to and within the ROM Class File itself, are defined and entered in the ROM Class File on the basis of the relocation information.

Then, in step 75, all classes, method tables, and array classes are built anew in accordance with the information contained in the ROM Class Files and HASH tables. For the classes this is based on iterations over all classes to be built, such that a class is not definitively built until all hierarchically superior classes have been completed first. These iterations are repeated until all classes have had their turn to be completed, or an exception has been posed, for example because a superior class is found to be not present. This method is found to occupy the least quantity of memory space.

The method table of a class contains a direct reference to the class-linked methods and is accordingly used during execution in a regular method call of the class. The standard Java Virtual Machine comprises an algorithm for composing such a method table. This algorithm is also used here for defining the associated method tables from the classes.

If Java arrays are used in a class, the ROM Class File will comprise so-termed constant-pool entries that point to the relevant arrays. These references, too, are newly defined. The relocation information contained in each ROM Class File is consulted for obtaining a summary of the necessary array classes per ROM Class File, and the associated name of the class is determined from the HASH table. If necessary, i.e. if the relevant array class is called directly from the ROM Class File and the structure was not composed previously, for example for a different ROM Class File, the correct class structure for the array class in question is built in the format of a ROM Class File, with the proviso that no relocation information is contained therein, because this is unnecessary here. After all class structures have been built anew, in as far as necessary, and the references therein have been recalculated, the classes are linked up again into a coherent whole which is fully present within the read memory of the target device and which can be executed directly on the basis of the updated reference values entered therein. In this relink step 76, the relocation information is read in the ROM Class Files and the symbolic information is used for redefining the pointers. The pointers thus recalculated are entered in the correct locations in the ROM Class File, which locations are known from the reference information.

After all the above steps have been successfully completed, any prepared back-up files and other auxiliary files may be removed so as to free the memory space occupied by them in the target device. This is carried out in the final step 77 of the loading process, whereby the entire process is completed. A configuration operating fully from the ROM has thus been obtained again from the new ROM Class File and the associated Link Info File. The placement in the ROM renders this configuration resistant to power cuts, so that the often limited random access memory capacity of the device need not be called upon for this purpose, or at least to a minimum degree only.

Although the invention was described above with reference to only this one embodiment, it will be clear to those skilled in the art that the invention is by no means limited thereto. Indeed, many more modifications and alternative embodiments are possible to those skilled in the art within the scope of the invention.

## Claims

1. A system for loading at least a partial program code from a source device into a target device which comprises electronic processing means and memory means, said source device being designed for forming an at least substantially complete internal representation for the target device on the basis of the partial program code, while transfer means are provided for transferring the substantially complete internal representation of the partial program code to the target device and for placing said representation in the memory thereof, **characterized in that** the source device is designed for generating an as yet incomplete internal representation of the partial program code together with reference information, which reference information enables the target device to determine references in the program code and to enter them afterwards, **in that** the transfer means are capable of and designed for transferring the as yet incomplete internal representation of the program code and the reference information to the target device, and **in that** the target device is capable of and designed for forming a complete internal representation of the program code from the incomplete internal representation on the basis of the reference information provided to the target device.

2. A system as claimed in claim 1, **characterized in that** the source device is designed for storing the string references and the partial program code in a first file and for storing the internal representation of the program code together with other reference information in a separate, second file, and **in that** the transfer means are capable of transferring both files to the target device.

3. A system as claimed in claim 2, **characterized in that** the target device is constructed for interweaving the offered file containing string references with an internal administration of other string references.

4. A system as claimed in claim 3, **characterized in that** the string references are stored in the target device in an encrypted form, in particular encrypted in accordance with a HASH algorithm.

5. A system as claimed in claim 4, **characterized in that** the string references are encrypted in accordance with a HASH algorithm implemented in the target device and are stored **in that** form in one or several HASH tables or other data structures maintained by the target device.

6. A system as claimed in any one of the preceding claims, **characterized in that** the memory means of the target device comprise a random access volatile memory as well as an electronically writable, non-volatile read-only memory, and **in that** the program code is loaded at least substantially into said read-only memory.

7. A system as claimed in claim 6, **characterized in that** the target device is provided with initializing means which are designed for initializing portions in the program code in an envisaged location in the read-only memory on the basis of reference information present and maintained as such in the target device, such that information can be freely written in said location.

8. A system as claimed in claim 7, **characterized in that** the target device is provided with defragmentation means which are designed for placing the program code in the target device in as contiguous a manner as possible in the read memory of the target device.

9. A system as claimed in claim 8, **characterized in that** the defragmentation means comprise the initializing means.

10. A system as claimed in any one of the preceding claims, **characterized in that** the source device and the target device are at least temporarily, whether or not simultaneously, coupled to one another by means of at least one communication link, and **in that** the transfer means render possible a data exchange over said communication link.

11. A system as claimed in claim 10, **characterized in that** the transfer means are capable of data exchange via a telecommunication network, which may or may not be hard-wired.
